(19)

Europäisches
Patentamt
European
Patent Office
Office européen
des brevets

(11) **EP 2 117 234 A2**

(12) **EUROPEAN PATENT APPLICATION**

(43) Date of publication:
**11.11.2009 Bulletin 2009/46**

(51) Int Cl.:
***H04N 7/26*** (2006.01)          ***H04N 7/50*** (2006.01)
***H04N 7/01*** (2006.01)

(21) Application number: **09159490.3**

(22) Date of filing: **06.05.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **10.05.2008 KR 20080043692**

(71) Applicant: **Samsung Electronics Co., Ltd.
Suwon-si,
Gyeonggi-do 442-742 (KR)**

(72) Inventors:
  • **Kim, Dae Hee
    443-768, Gyeonggi-do (KR)**

  • **Choi, Woong Il
    445-739, Gyeonggi-do (KR)**
  • **Cho, Dae Sung
    135-926, Seoul (KR)**

(74) Representative: **D'Halleweyn, Nele Veerle Trees
Gertrudis et al
Arnold & Siedsma
Sweelinckplein 1
2517 GK The Hague (NL)**

(54) **Method and apparatus for encoding/decoding with interlace scanning based motion vector transformation**

(57)     An interlace scanning image encoding or decoding method. The interlace scanning image encoding method includes estimating motion of a present field corresponding to a portion of a present image based on a main reference field and calculating a motion vector of the main reference field, selecting a subsidiary reference field related to the main reference field, deriving a motion vector of the subsidiary reference field from the motion vector of the main reference field, generating a prediction field of the present field using any one of the motion vector of the main reference field and the motion vector of the subsidiary reference field, and encoding a residual field between the present field and the prediction field.

**FIG. 9**

EP 2 117 234 A2

**Description**

BACKGROUND

1. Field

One or more embodiments relate to a method and apparatus of encoding or decoding an image, and particularly, to a method and apparatus of encoding or decoding with interlace scanning based motion vector transformation.

2. Description of the Related Art

Recently, communication environments have been established to provide various information that users desire, including real time voice and video/images. Moreover, digital television systems that can process a movie into digital data, transmit in real time, and receive corresponding processed data for display, as well as a personal portable terminals that can provide mobile communication services using such a movie, and the like, have been at the forefront of development for this communication environment.

Encoding of an image is typically a technical element of a system for movies. Also systems can improve the quality of images by utilizing motion vectors of a multi-reference image when encoding and decoding is performed, thereby providing good quality services to a user. However, in such motion vector encoding/decoding operations, searching for an appropriate reference image best matched to a present image, one by one, and considering all motion vectors of a plurality of reference images, may increase the complexity of encoding/decoding processing. Accordingly, development of a method of encoding/decoding an image which can effectively perform multi-motion prediction using a motion vector with respect to a main reference image is desired.

SUMMARY

According to one or more embodiments, there is provided an encoding method of encoding an interlace scanning image, the method including estimating motion of a present field corresponding to a portion of a present image based on a main reference field for the present image and calculating a motion vector of the main reference field, selecting a subsidiary reference field related to the main reference field, deriving a motion vector of the subsidiary reference field from the motion vector of the main reference field, generating a prediction field of the present field from at least one of the motion vector of the main reference field and the motion vector of the subsidiary reference field, and encoding a residual field between the present field and the prediction field to generate the encoded interlace scanning image.

The main reference field may be a temporarily past field relative to the present field, or the main reference field may be a temporarily future field relative to the present field.

The selecting of the subsidiary reference field may include selecting a field with a polarity different from a polarity of the main reference field, as the subsidiary reference field.
The selecting of the subsidiary reference field may include selecting a field with a different polarity in a same image where the main reference field belongs, as the subsidiary reference field.

Further, the deriving of the motion vector may include performing a linear transformation based on the motion vector of the main reference field to derive the motion vector of the subsidiary reference field, and the linear transformation may be performed using a determined time difference between the main reference field and the present field.

Still further, the method may include selecting one of the motion vector of the main reference field and the motion vector of the subsidiary reference field according to a comparison result between a compression rate of the present field according to the motion vector of the main reference field and a compression rate of the present field according to the motion vector of the subsidiary reference field.

The generating of the prediction field of the present field may further include generating the prediction field selectively based on one of the motion vector of the main reference field and the motion vector of the subsidiary reference field.

In addition, the method may include encoding the motion vector of the main reference field according to a predetermined syntax without encoding the motion vector of the subsidiary reference field to generate the encoded interlace scanning image.

Here, the present field, main reference field, and subsidiary reference field may be respectively one of a top and bottom interlace fields.

According to one or more embodiments, there is provided a decoding method of decoding an interlace scanning image, the method including restoring, from a bit stream, a residual field between a present field, corresponding to a portion of a present image, and a prediction field for the present field, deriving a motion vector of a subsidiary reference field from a motion vector of a main reference field among reference fields of the present field, generating the prediction field from one of the motion vector of the main reference field and the motion vector of the subsidiary reference field, and generating the decoded interlace scanning image by adding the restored residual field to the generated prediction field.

According to one or more embodiments, there is provided an apparatus encoding an interlace scanning image, the apparatus including a motion estimator to estimate a motion of a present field corresponding to a portion of a present image based on a main reference field for the present image to calculate a motion vector of the main reference field, to select a subsidiary reference field related to the main reference field, and to derive a motion vector of the subsidiary reference field from the motion vector of the main reference field, a motion compensator to generate a prediction field of the present field from one of the motion vector of the main reference field and the motion vector of the subsidiary reference field, and an encoder to encode a residual field between the present field and the prediction field to generate the encoded interlace scanning image.

According to one or more embodiments, there is provided a decoding method of decoding an interlace scanning image from encoded image data, the method including restoring, from the encoded image data, a residual field between a present field corresponding to a portion of a present image and a motion prediction field for the present image, generating the motion prediction field using a motion vector of a subsidiary reference field, different from a motion vector of the main reference field among reference fields of the present field, the subsidiary reference field being derived from the motion vector of the main reference field, outputting the decoded interlace scanning image based on the restored residual field and the generated motion prediction field.

According to one or more embodiments, there is provided an decoding apparatus decoding an interlace scanning image, the apparatus including a decoder to restore, from a bit stream, a residual field between a prediction field for a present image and a present field corresponding to a portion of the present image, a compensator to derive a motion vector of a subsidiary reference field from a motion vector of the main reference field among reference fields of the present field, and to generate the prediction field from one of the motion vector of the main reference field and motion vector of the subsidiary reference field, and an adder to add the restored residual field to the generated prediction field to restore the present field to generate the encoded interlace scanning image.

One or more embodiments provide an interlace scanning image encoding/decoding method and apparatus that can more flexibly perform encoding or decoding by selecting a past field or future field based on the present field.

One or more embodiments provide an interlace scanning image encoding/decoding method and apparatus that effectively reduces a process complexity, by selecting a different field in the same image where a main reference field belongs as a subsidiary reference field.

Additional aspects and/or advantages will be set forth in part in the description which follows and, in part, will be apparent from the description, or may be learned by practice of the invention.

BRIEF DESCRIPTION OF THE DRAWINGS

These and/or other aspects and advantages will become apparent and more readily appreciated from the following description of the embodiments, taken in conjunction with the accompanying drawings of which:

FIG. 1 illustrates an apparatus of encoding an interlace scanning image, according to one or more embodiments;
FIG. 2 illustrates an example of location relation between a present field, main reference field, and subsidiary reference field when the main reference field and subsidiary reference field are included in a past image based on the present field;
FIG. 3 illustrates an example of location relation between a present field, main reference field, and subsidiary reference field when the main reference field and subsidiary reference field are included in a future image based on the present field;
FIG. 4 illustrates an example case where a polarity of a present field and main reference field are the same and the main reference field is a past field, according to one or more embodiments;
FIG. 5 illustrates an example case where a polarity of a present field and main reference field are different from each other and the main reference field is a past field, according to one or more embodiments;
FIG. 6 illustrates an example case where a polarity of a present field and main reference field are the same and the main reference field is a future field, according to one or more embodiments;
FIG. 7 illustrates an example case where a polarity of a present field and main reference field are different from each other and the main reference field is a future field, according to one or more embodiments;
FIG. 8 illustrates an apparatus of decoding an interlace scanning image, according to one or more embodiments;
FIG. 9 illustrates a method of encoding an interlace scanning image, according to one or more embodiments; and
FIG. 10 illustrates a method of decoding an interlace scanning image, according to one or more embodiments.

DETAILED DESCRIPTION OF EMBODIMENTS

Reference will now be made in detail to embodiments, examples of which are illustrated in the accompanying drawings, wherein like reference numerals refer to like elements throughout. In this regard, embodiments of the present invention may be embodied in many different forms and should not be construed as being limited to embodiments set forth herein. Accordingly, embodiments are merely described below, by referring to the figures, to explain aspects of the present invention.

Herein, the term "image" is synonymous with terms such as "picture", "frame", and the like. An encoding of the image may be included in an encoding of video made up of plural images.

A scalable image processing environment according to one or more embodiments may include a first encoding apparatus, a first decoding apparatus, a second encoding apparatus, and a second decoding apparatus, for example. The first encoding apparatus and the first decoding apparatus may contain an existing codec, for example, that can replay a 4:2:0 image or image with an eight-bit depth. The second encoding apparatus and the second decoding apparatus may contain a new codec, also as an example, that can replay a 4:4:4 image, 4:2:2 image, or image with a ten-bit depth. Here, though such codecs are referenced, alternative embodiments are equally available.

In this example, the first encoding apparatus may encode the 4:2:0 image or an image with a eight-bit depth, and output a bit stream corresponding to a result. The second encoding apparatus may also encode the 4:4:4 image, 4:2:2 image, or an image with a ten-bit depth, and output a bit stream corresponding to a result. Compatibility in which the first decoding apparatus containing the existing codec can replay the bit stream output from the second encoding apparatus containing the new codec is referred to as a forward compatibility. In addition, compatibility in which the second decoding apparatus containing the new codec can replay the bit stream output from the first encoding apparatus containing the existing codec is referred to as a backward compatibility. Particularly, embodiments to be described below may support the forward compatibility, for example.

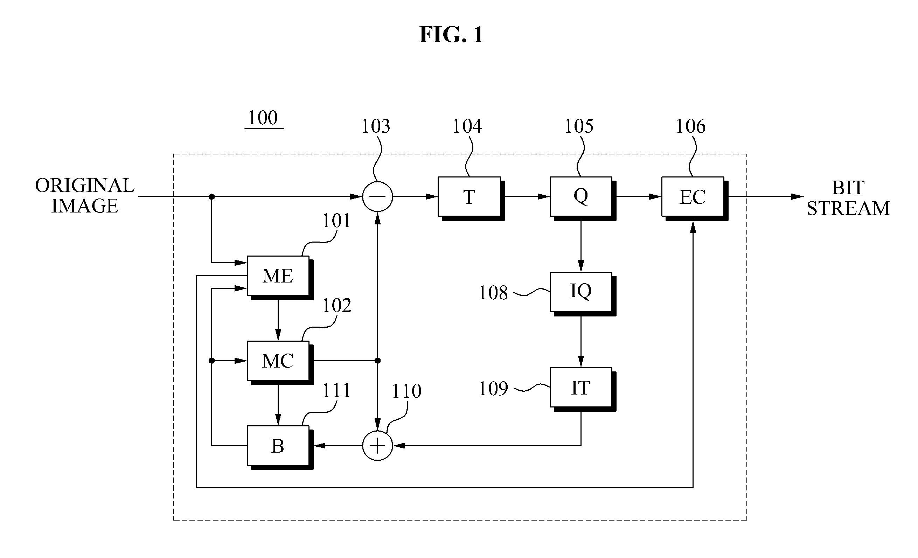

FIG. 1 illustrates an apparatus of encoding an interlace scanning image, according to one or more embodiments. Herein, throughout the following description, the term apparatus should be considered synonymous with elements of a physical system, not limited to a single enclosure or all described elements embodied in single respective enclosures in all embodiments, but rather, depending on embodiment, is open to being embodied together or separately in differing enclosures and/or locations through differing elements. As only another example, a respective apparatus/system or method could also be controlled through one or more processing elements/devices or implemented through a distributed network, noting that additional and alternative embodiments are equally available.

Referring to FIG. 1, the interlace scanning image encoding apparatus 100 may include a motion estimator 101, motion compensator 102, a first subtracter 103, a first transforming unit 104, quantizing unit 105, entropy encoder 106, bit stream generator, dequantizing unit 108, inverse transforming unit 109, adder 110, and buffer 111, for example. In an embodiment it may be assumed, as an example, that a size of a block corresponding to an image processing unit is a 16 x 16 sized block. The block with a 16 x 16 sized block may be referred to as a macroblock. However, it is well known by those skilled in the art that the block size may range from 16 x 8, 8 x 16, 8 x 8, 4 x 4 sized blocks and the like, as well as the 16 x 16 sized block, noting that alternatives are also available.

In general, encoding of an image may be performed according to progressive scanning or interlace scanning. The progressive scanning is a method that sequentially displays a single image on a screen from beginning to the end.

The interlace scanning image encoding apparatus 100 may encode the image according to the interlace scanning method. Additionally, according to an embodiment, the interlace scanning image encoding apparatus 100 may also encode according to the progressive scanning method. Interlace scanning is a display technique that separately displays the even lines of the single image from the odd lines of the single image on the same screen. That is, the single image may be classified into a top field that is composed of the odd lines and a bottom field composed of the even lines. Accordingly, a variety of images processed in an image encoding process according to the interlace scanning method may actually only represent a portion, e.g., half, of an image input to the interlace scanning image encoding apparatus 100. Herein, the term "a present field" can mean any one of the example top field and the bottom field, for example.

The motion estimator 101 may estimate motion of an image (hereinafter, a present field) corresponding to half of a present input image, e.g., among a series of images corresponding to a movie, based on a main reference field among reference fields stored in a buffer 111, and thereby calculate a motion vector of the main reference field. Describing in more detail, the motion estimator 101 may select any one of the reference fields stored in the buffer 111 as the main reference field, determine a block of the main reference field that is best matched to a block of the present field with respect to every block that makes up the present field, and calculate the motion vector that indicates a displacement between the determined block of the main reference field and the block of the present field. Specifically, in an embodiment, the motion estimator 101 may determine a past reference field to be the main reference field, based on the present field, from among the reference fields. For example, the motion estimator 101 may select, from among past reference fields, a reference field that is generally matched best to the present field to be the main reference field. The main reference field may be a closest field, e.g., adjacent, to the present field among the past reference fields or may be another field.

In addition, according to an embodiment, the main reference field may be a reference field having a predetermined time difference from the present field, the time difference being in field units, among the past reference field.

In addition, the motion estimator 101 may select a reference field related to the main reference field from among the reference fields stored in the buffer 111 to be a subsidiary reference field, perform a linear transformation of the calculated motion vector of the main reference field, and thereby derive a motion vector of the subsidiary reference field from the motion vector of the main reference field. Specifically, the motion estimator 101 may select a field with a different polarity, e.g., top field compared to bottom field, in the same image where the main reference field belongs to be the subsidiary reference field. Accordingly, the motion estimator 101 may simultaneously read, from the buffer 111, the main reference field and the other polarity field in the same image where the main reference field belongs and select the other polarity field to be the subsidiary reference field, thereby reducing a number of accesses to the buffer 111. In addition, the linear transformation may be performed using a time difference between the main reference field and the present field. A process of deriving a motion vector will be described in greater detail below.

Since a conventional method of encoding an interlace scanning image calculates respective motion vectors of reference fields through an estimating of motion of a present field with respect to every reference field stored in the buffer 111, namely, searching for a block of a reference field that best matches a block of the present field, one by one, this conventional process of deriving the motion vector is not efficient and the complexity of the process extremely increases as the number of reference fields increase.

Conversely, according to an embodiment, the process of calculating the motion vector is very simple and efficient, since the described process of the searching for the reference fields may, in an embodiment, only be performed only with respect to the main reference field, and a reference field, which is apart as far as a predetermined time difference from the present field, may be determined to be the main reference field. The motion vector of another reference field may thus be easily derived from the motion vector of the main reference field using an algorithm, such as one referenced below, for example. In addition, according to an embodiment, the interlace scanning image encoding apparatus 100 may consider a compression rate of the main reference field and also consider a compression rate of a subsidiary reference field, which is another reference field in the same image where the main reference field belongs, and thus all frames in the same image may be utilized, and compression efficiency may also be improved

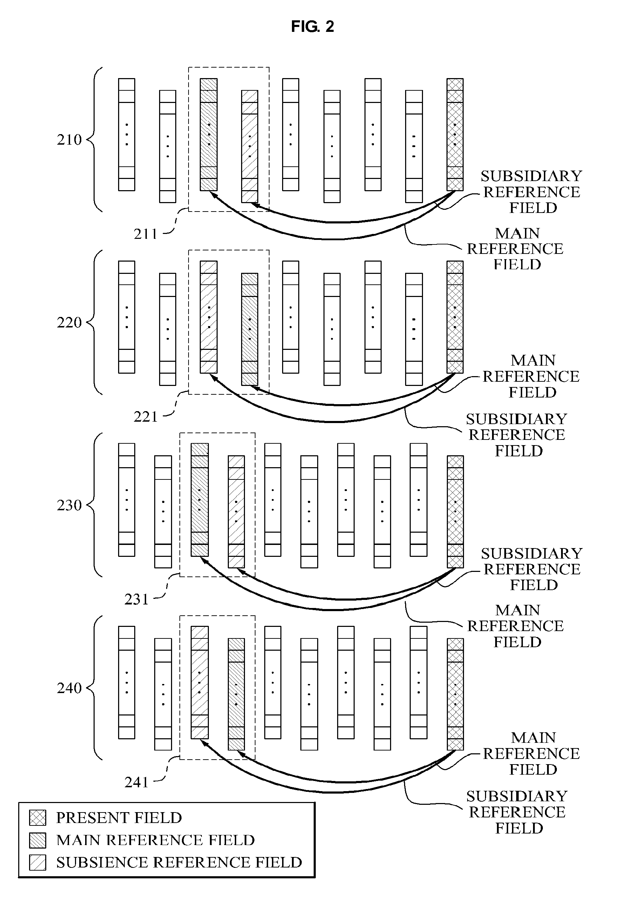

FIG. 2 illustrates an example of location relation between a present field, main reference field, and subsidiary reference field when the main reference field and subsidiary reference field are included in a past image based on the present field.

A configuration 210 of FIG. 2 illustrates an example where the subsidiary reference field is determined to be a bottom field of a reference image 211 when the present field that is currently encoded is a top field and the main reference field is a top field of the past reference image 211 compared with the present field. As an alternative, compared with the above, a configuration 220 of FIG. 2 illustrates an example where the subsidiary reference field is determined to be a top field of a reference field 221 when the present field that is currently encoded is a top field and the main reference field is a bottom field of the past reference image 221 compared with the present field.

In addition, a configuration 230 of FIG. 2 illustrates an example where the subsidiary reference field is determined to be a bottom field of a reference image 231 when the present field that is currently encoded is a bottom field and the main reference field is a top field of the past reference image 231 compared with the present field. Still further, a configuration 240 of FIG. 2 illustrates an example where the subsidiary reference field is determined to be a top field of a reference image 241 when the present field that is currently encoded is a bottom field and the main reference field is a bottom field of the past reference image 241 compared with the present field.

Unlike progressive scanning, in interlace scanning the main reference field and subsidiary reference field may cross up to one pixel with each other in a vertical direction, for example. That is, a polarity of the main reference field and a polarity of the subsidiary reference field may be different from each other. Examples include the case where the main reference field has a top polarity and the subsidiary reference field has a bottom polarity and the case where the main field has the bottom polarity and the subsidiary reference field has the top polarity. Accordingly, with interlace scanning, to derive a motion vector of the subsidiary reference field from a motion vector of the main reference field, consideration of the polarity difference between the main reference field and the subsidiary reference field may be required. When the polarity of the main reference field and the subsidiary reference field are the same, the motion vector of the subsidiary reference field may be derived from the motion vector of the main reference field in a similar manner to the progressive scanning method.

According to progressive scanning, a motion vector of a subsidiary reference image may be derived from a motion vector of a main reference image. In the case where the subsidiary reference image is further apart in time from the present image compared to the main reference image, the motion estimator 101 may multiply the motion vector of the main reference image by a ratio of a sum of one and a time difference between the main reference image and a present image to the time difference between the main reference image and the present image to derive the motion vector of the subsidiary image. Compared with the above, in the case where the subsidiary reference image is closer in time to the present image than the main reference image, the motion estimator 101 may multiply the motion vector of the main reference image by a ratio of a subtraction of one from the time difference between the main reference image and the present image to the time difference between the main reference image and the present image to derive the motion vector of the subsidiary image. Here, the identified ratios should be considered examples, and not limiting of the potential embodiments.

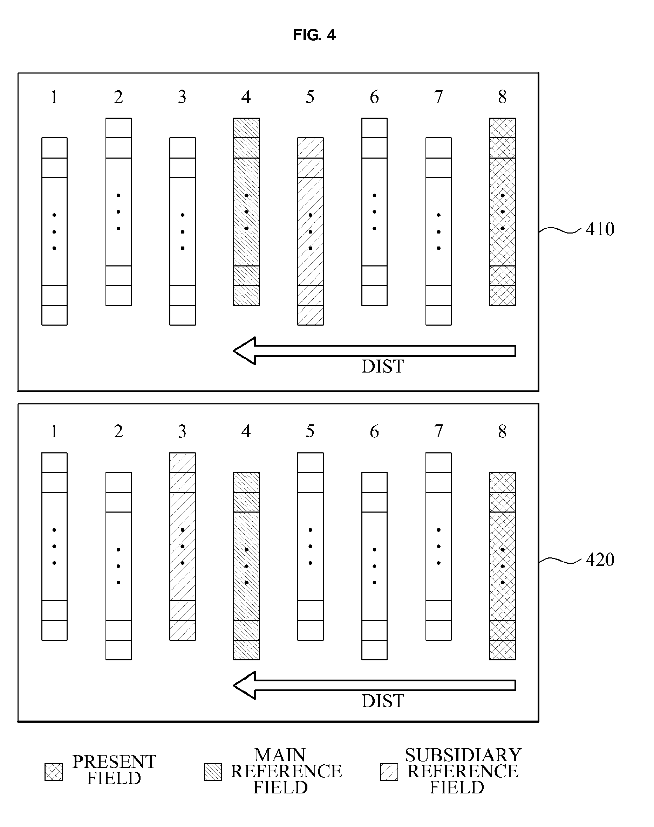

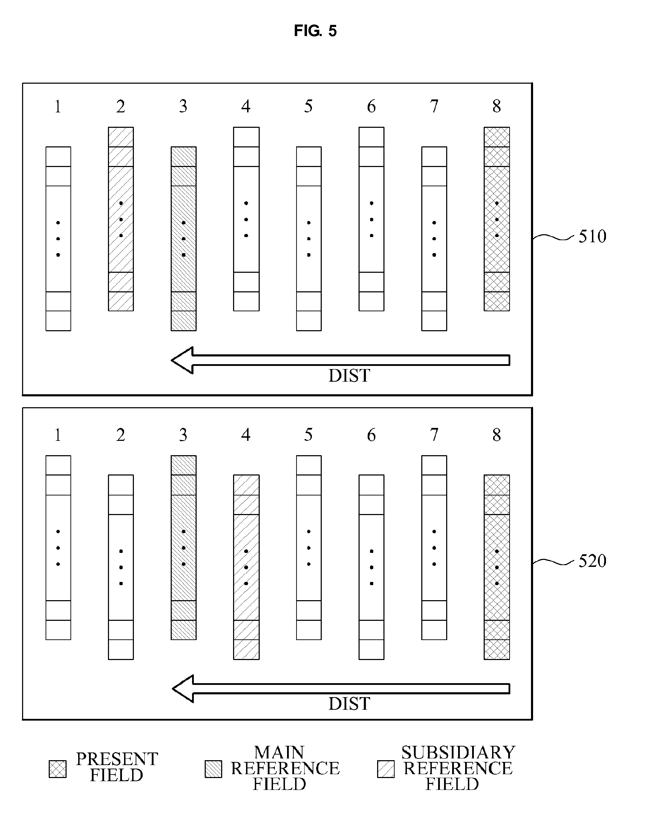

Finally, in this example, the motion estimator 101 may perform a linear transformation of the motion vector of the main reference field using the time difference between the main reference field and the present field and the polarity difference between the main reference field and the subsidiary reference field, thereby deriving the motion vector of the subsidiary reference field. Here, in this example, when the reference image is a past image based on the present field in the interlace scanning image method, deriving of the motion vector of the subsidiary reference field from the motion vector of the main reference field, based on whether the polarity of the present field and the main reference field is the same, will be described in further detail below with reference to FIGS. 4 and 5.

Further, the motion estimator 101 may determine a future reference field to be the main reference field based on the present field, among the reference fields. For example, the motion estimator 101 may select a reference field that generally best matches with the present field as the main reference field from among future reference fields stored in the buffer 111. The main reference field may be a reference field closest to the present field among the future reference fields or may be another reference field. In addition, according to another embodiment, the main reference field may be a reference field that is as far apart as predetermined time difference from the present field, among future reference fields, the time difference being in field units.

In addition, the motion estimator 101 may select a reference field that is related to the main reference field to be the subsidiary reference field from among the reference fields stored in the buffer 111, perform a linear transformation of the motion vector of a calculated motion vector of the main reference field, and thereby derive the motion vector of the subsidiary reference field from the motion vector of the main reference field. Specifically, in an embodiment, the motion estimator 101 may select a field with a different polarity existing in the same image where the main reference field belongs to be the subsidiary reference field. Therefore, the motion estimator 101 may read the main reference field and the other field, existing in the image where the main reference field belongs, from the buffer 111 and select the other field as the subsidiary reference field, thereby reducing the number of accesses to the buffer 111. In addition, the linear transformation may be performed using the time difference between the main reference field and the present field.

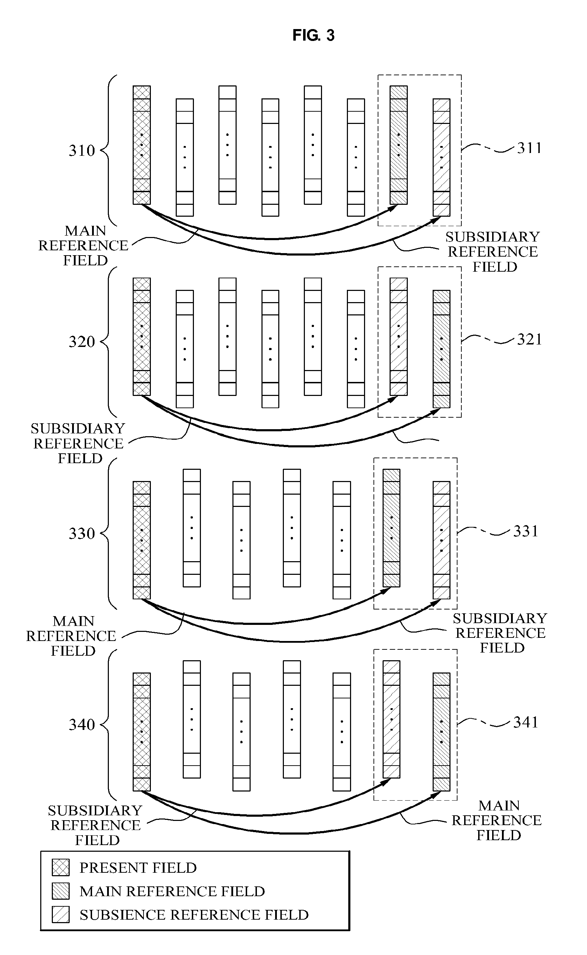

FIG. 3 illustrates an example of location relation between a present field, main reference field, and subsidiary reference field when the main reference field and subsidiary reference field are included in a future image, based on the present field.

A configuration 310 of FIG. 3 illustrates an example where the subsidiary reference field is determined to be a bottom field of a future reference image 311 when the present field that is currently encoded is a top field and the main reference field is a top field of the future reference image 311 compared with the present field. Compared with the above, a configuration 320 of FIG. 3 illustrates an example where the subsidiary reference field is determined to be a top field of a future reference image 321 when the present field that is currently encoded is a top field and the main reference field is a bottom field of the future reference image 321 compared with the present field.

In addition, a configuration 330 of FIG. 3 illustrates an example where the subsidiary reference field is determined to be a bottom field of a future reference image 331 when the present field that is currently encoded is a bottom field and the main reference field is a top field of the future reference image 331 compared with the present field. A configuration 340 of FIG. 3 illustrates an example where the subsidiary reference field is determined to be a top field of a future reference image 341 when the present field that is currently encoded is a bottom field and the main reference field is a bottom field of the future reference image 341 compared with the present field.

As described above, even when the main reference field is in a future time, if the polarity of the main reference field and the subsidiary reference field is the same, a motion vector of the subsidiary reference field may be derived from a motion vector of the main reference field in a similar manner to progressive scanning.

According to progressive scanning, a motion vector of a subsidiary reference image may be derived from a motion vector of a main reference image in the future time. In the case where the subsidiary reference image is further apart in time from the present image compared to the main reference image, the motion estimator 101 may multiply the motion vector of the main reference image by a ratio of a sum of one and a time difference between the main reference image and a present image to the time difference between the main reference image and the present image to derive the motion vector of the subsidiary image. Compared with the above, in the case where the subsidiary reference image is closer in time to the present image than the main reference image, the motion estimator 101 may multiply the motion vector of the main reference image by a ratio of a subtraction of one from the time difference between the main reference image and the present image to the time difference between the main reference image and the present image to derive the motion vector of the subsidiary image. Here, the identified ratios should be considered examples, and not limiting of the potential embodiments.

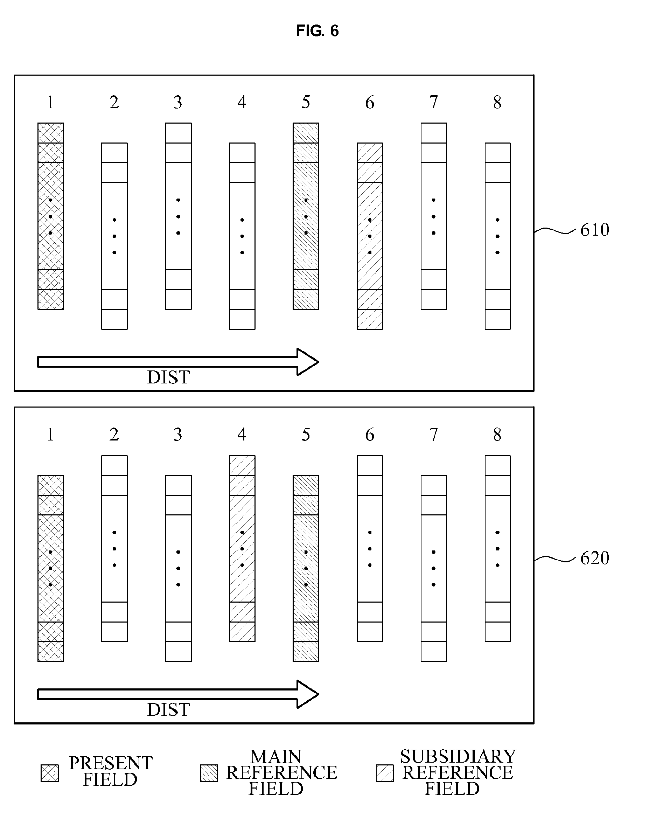

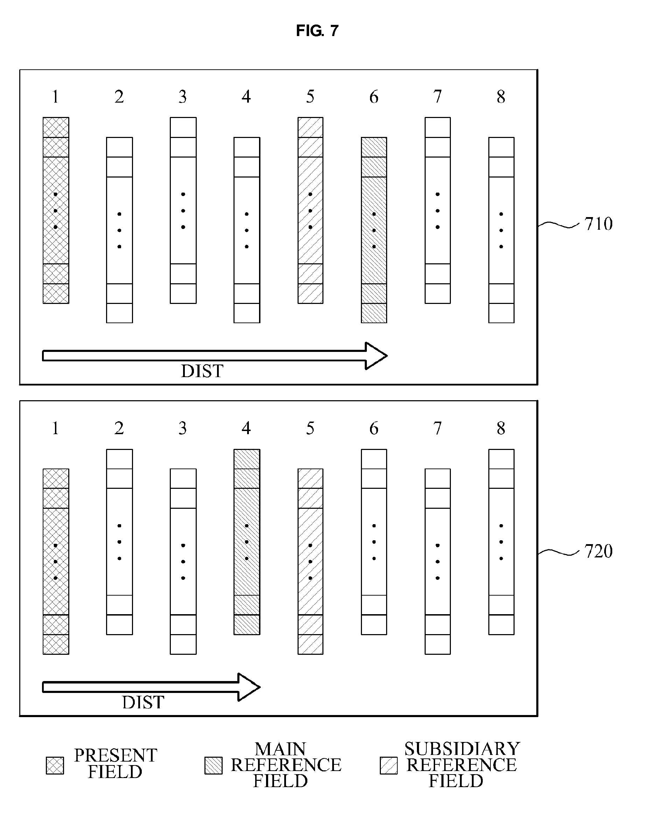

Finally, the motion estimator 101 may perform a linear transformation of the motion vector of the main reference field using the time difference between the main reference field and the present field and the polarity difference between the main reference field and the subsidiary reference field, thereby deriving the motion vector of the subsidiary reference field. Here, in this example, when the reference image is a future image based on the present field in the interlace scanning image method, deriving of the motion vector of the subsidiary reference field from the motion vector of the main reference field based on whether the polarity of the present field and the main reference field is the same will be described in further detail with below with reference to FIGS. 6 and 7.

FIG. 4 illustrates the example case where a polarity of a present field and main reference field are the same and the main reference field is a past field.

Referring to a top portion 410 of FIG. 4, when the field No. 4, which is a top field having the same polarity with the present field is selected to be the main reference field, a motion estimator 101 may select the field No. 5, which is a bottom field of the same image where the main reference field belongs to be the subsidiary reference field. In this instance, the motion estimator 101 may derive a motion vector with respect to the subsidiary reference field of the present field from a motion vector with respect to the main reference field of the present field that is currently encoded, using a linear transformation given in the below Equation 1, for example.

Equation 1:

$$MV_x^{aux} = \frac{MV_x^{main} \times (dist - 1) + \frac{1}{2} dist}{dist}$$

$$MV_y^{aux} = \frac{MV_y^{main} \times (dist - 1) + \frac{1}{2} dist}{dist} + offset$$

Here, $MV_x^{main}$ indicates an x coordinate of the motion vector with respect to the main reference field of the present field $MV$ and $MV_y^{main}$ indicates an y coordinate of the motion vector with respect to the main reference field of the present field $MV$. In addition, $MV_x^{aux}$ indicates an x coordinate of the motion vector with respect to the subsidiary reference field of the present field $MV$ and $MV_y^{aux}$ indicates a y coordinate of the motion vector with respect to the subsidiary reference field of the present field $MV$. Here, $dist$ further indicates a distance in field units from the present field to the main reference field. Further, $\frac{1}{2} dist$ indicates an adjustment value for rounding off after a division operation and ($dist$-1) indicates a distance from the present field to the subsidiary reference field that is a bottom field. Since the main reference field and the subsidiary reference field belong to the same image, the ($dist$-1) may be determined. The term, $offset$ indicates an adjustment value to adjust a polarity difference. Specifically, $offset$ in Equation 1 is to adjust the polarity difference between the main reference field and the subsidiary reference field.

Since fields used in the method of encoding an interlace scanning image correspond to a portion, e.g., half, of an original image, a size of an $offset$ to adjust the polarity difference between the main reference field and subsidiary reference field becomes a half pixel unit of a pixel unit making up the original image, for example. In general, to restore the image in detail through an interpolation and the like, the motion vector may be expressed in half pixel units or 1/4 pixel units, in such an example. When the motion vector in an embodiment is expressed in half pixel units, a size unit of the $offset$ may become 1, and when the motion vector is expressed in 1/4 pixel units, the size unit of the $offset$ may become 2.

As shown in the top portion 410 of FIG. 4, when the present field is a top field and the subsidiary reference field is a bottom field, the $offset$ has a negative value. Accordingly, when the motion vector is expressed by the half pixel unit, the $offset$ in Equation 1 may be -1.

Referring to a bottom portion 420 of FIG. 4, when a field No. 4, which is a bottom field having the same polarity with the present field, is selected as the main reference field, the motion estimator 101 may select a field No. 3, which is a top field of the same image where the main reference field belongs, to be the subsidiary reference field. In this instance, the motion estimator 101 may derive the motion vector with respect to the subsidiary reference field of the present field from the motion vector with respect to the main reference field of the present field that is currently encoded using the linear transformation of the below Equation 2, for example.

Equation 2:

$$MV_x^{aux} = \frac{MV_x^{main} \times (dist + 1) + \frac{1}{2} dist}{dist}$$

$$MV_y^{aux} = \frac{MV_y^{main} \times (dist + 1) + \frac{1}{2} dist}{dist} + offset$$

Here, $MV_x^{main}$ indicates an x coordinate of the motion vector with respect to the main reference field of the present field *MV* and $MV_y^{main}$ indicates an y coordinate of the motion vector with respect to the main reference field of the present field *MV*. In addition, $MV_x^{aux}$ indicates an x coordinate of the motion vector with respect to the subsidiary reference field of the present field *MV* and $MV_y^{aux}$ indicates a y coordinate of the motion vector with respect to the subsidiary reference field of the present field *MV*. Here, *dist* further indicates a distance in field units from the present field to the main reference field. Further, 2 indicates an adjustment value for rounding off after a division operation and (*dist*+1) indicates a distance from the present field to the subsidiary reference field that is a top field. Since the main reference field and the subsidiary reference field belong to the same image, the (*dist*+1) may be determined. The term, *offset* indicates an adjustment value to adjust a polarity difference. Specifically, *offset* in Equation 2 is to adjust the polarity difference between the main reference field and the subsidiary reference field.

Since fields used in the method of encoding an interlace scanning image correspond to a portion, e.g., half, of an original image, a size of an *offset* to adjust the polarity difference between the main reference field and subsidiary reference field becomes a half pixel unit of a pixel unit making up the original image, for example. In general, to restore the image in detail through an interpolation, and the like, the motion vector may be expressed in half pixel units or 1/4 pixel units, in such an example. When the motion vector in an embodiment is expressed in half pixel units, a size unit of the *offset* may become 1, and when the motion vector is expressed by the 1/4 pixel unit, the size unit of the *offset* may become 2.

As shown in the top portion 420 of FIG. 4, when the present field is a bottom field and the subsidiary reference field is a top field, the *offset* has a positive value. Accordingly, when the motion vector is expressed by the half pixel unit, the *offset* in Equation 2 may be 1.

FIG. 5 illustrates the example case where a polarity of a present field and main reference field are different from each other and the main reference field is a past field.

Referring to a top portion 510 of FIG. 5, when a field No. 3, which is a bottom field having a different polarity from the present field, is selected as the main reference field, a motion estimator 101 may select a field No. 2, which that is a top field of the same image where the main reference field belongs, to be the subsidiary reference field. In this instance, the motion estimator 101 may derive a motion vector with respect to the subsidiary reference field of the present field from a motion vector with respect to the main reference field of the present field that is currently encoded, using a linear transformation given in the below Equation 3, for example.

Equation 3:

$$MV_x^{aux} = \frac{MV_x^{main} \times (dist+1) + \frac{1}{2} dist}{dist}$$

$$MV_y^{aux} = \frac{(MV_y^{main} + offset) \times (dist+1) + \frac{1}{2} dist}{dist}$$

Here, $MV_x^{main}$ indicates an x coordinate of the motion vector with respect to the main reference field of the present field $MV$ and $MV_y^{main}$ indicates y coordinate of the motion vector with respect to the main reference field of the present field $MV$. In addition, $MV_x^{aux}$ indicates an x coordinate of the motion vector with respect to the subsidiary reference field of the present field $MV$ and $MV_y^{aux}$ indicates a y coordinate of the motion vector with respect to the subsidiary reference field of the present field $MV$. Here, $dist$ further indicates a distance in field units from the present field to the main reference field. Further, $\frac{1}{2} dist$ indicates an adjustment value for rounding off after a division operation and ($dist$+1) indicates a distance from the present field to the subsidiary reference field that is a top field. Since the main reference field and the subsidiary reference field belong to the same image, the ($dist$+1) may be determined. The term $offset$ indicates an adjustment value to adjust a polarity difference. Specifically, $offset$ in Equation 3 is used before performing transformation to adjust the polarity difference between the main reference field and the present field, and the $offset$ may adjust the polarity difference of the present field before the transformation.

In addition, when the motion vector is expressed in half pixel units, for example, since the motion vector of the main reference field is required to be transformed into the top field that is the same with the motion vector of the subsidiary reference field, the $offset$ may have a positive value and $offset$ in Equation 3 may be 1.

Referring to a bottom portion 520 of FIG. 5, when a field No. 3, which is a top field having a different polarity from the present field, is selected to be the main reference field, the motion estimator 101 may select a field No. 4, which is a bottom field of the same image where the main reference field belongs, to be the subsidiary reference field. In this instance, the motion estimator 101 may derive the motion vector with respect to the subsidiary reference field of the present field from the motion vector with respect to the main reference field of the present field that is currently encoded, using the linear transformation of the below Equation 4, for example.

Equation 4:

$$MV_x^{aux} = \frac{MV_x^{main} \times (dist-1) + \frac{1}{2} dist}{dist}$$

$$MV_y^{aux} = \frac{(MV_y^{main} + offset) \times (dist-1) + \frac{1}{2} dist}{dist}$$

Here, $MV_x^{main}$ indicates an x coordinate of the motion vector with respect to the main reference field of the present field *MV* and $MV_y^{main}$ indicates y coordinate of the motion vector with respect to the main reference field of the present field *MV*. In addition, $MV_x^{aux}$ indicates an x coordinate of the motion vector with respect to the subsidiary reference field of the present field *MV* and $MV_y^{aux}$ indicates a y coordinate of the motion vector with respect to the subsidiary reference field of the present field *MV*. Here, *dist* further indicates a distance in field units from

the present field to the main reference field. Further, $\frac{1}{2}dist$ indicates an adjustment value for rounding off after a division operation and (*dist*-1) indicates a distance from the present field to the subsidiary reference field that is a top field. Since the main reference field and the subsidiary reference field belong to the same image, the (*dist*-1) may be determined. The term *offset* indicates an adjustment value to adjust a polarity difference. Specifically, *offset* in Equation 4 is used before performing transformation to adjust the polarity difference between the main reference field and the present field, and the offset may adjust the polarity difference of the present field before the transformation.

In addition, in an embodiment when the motion vector is expressed in half pixel units, for example, since the motion vector of the main reference field is required to be transformed into the bottom field that is the same with the motion vector of the subsidiary reference field, the *offset* may have a negative value and *offset* in Equation 4 may be -1.

FIG. 6 illustrates the example case where polarity of a present field and main reference field is the same with each other and the main reference field is a future field.

Referring to a top portion 610 of FIG. 6, when a field No. 5, which is a top field having the same polarity as the present field, is selected to be the main reference field, a motion estimator 101 may select a field No. 6, which is a bottom field of the same image where the main reference field belongs, to be the subsidiary reference field. In this instance, the motion estimator 101 may derive a motion vector with respect to the subsidiary reference field of the present field from a motion vector with respect to the main reference field of the present field that is currently encoded, using a linear transformation given in the below Equation 5, for example.

Equation 5:


$$MV_x^{aux} = \frac{MV_x^{main} \times (dist+1) + \frac{1}{2}dist}{dist}$$

$$MV_y^{aux} = \frac{MV_y^{main} \times (dist+1) + \frac{1}{2}dist}{dist} + offset$$


Here, $MV_x^{main}$ indicates an x coordinate of the motion vector with respect to the main reference field of the present field *MV* and $MV_y^{main}$ indicates y coordinate of the motion vector with respect to the main reference field of the present field *MV*. In addition, $MV_x^{aux}$ indicates an x coordinate of the motion vector with respect to the subsidiary reference field of the present field *MV* and $MV_y^{aux}$ indicates a y coordinate of the motion vector with respect to the subsidiary reference field of the present field *MV*. Here, *dist* indicates a distance in field units from the

present field to the main reference field. Further, $\frac{1}{2}dist$ indicates an adjustment value for rounding off after a division operation and (*dist*+1) indicates a distance from the present field to the subsidiary reference field that is a bottom field. Since the main reference field and the subsidiary reference field belong to the same image, the (*dist*+1) may be determined. Specifically, a cause of a difference between (*dist*-1) of Equation 1 and (*dist*+1) of Equation 5 is a distance difference between a distance from the present field to the main reference field and a distance from the present field to the subsidiary reference field. The term *offset* indicates an adjustment value to adjust a polarity difference. Specifically, *offset* in Equation 5 is to adjust the polarity difference between the main reference field and the subsidiary reference field.

In addition, as described above, when a method for expressing a motion vector in half pixel units is used, for example, *offset* in Equation 5 may be -1.

Referring to a bottom portion 620 of FIG. 6, when a field No. 5, which is a bottom field having the same polarity with the present field, is selected to be the main reference field, the motion estimator 101 may select a field No. 4, which is a top field of the same image where the main reference field belongs, to be the subsidiary reference field. In this instance, the motion estimator 101 may derive the motion vector with respect to the subsidiary reference field of the present field from the motion vector with respect to the main reference field of the present field that is currently encoded, using the linear transformation of the below Equation 6, for example.

Equation 6:

$$MV_x^{aux} = \frac{MV_x^{main} \times (dist - 1) + \frac{1}{2} dist}{dist}$$

$$MV_y^{aux} = \frac{MV_y^{main} \times (dist - 1) + \frac{1}{2} dist}{dist} + offset$$

Here, $MV_x^{main}$ indicates an x coordinate of the motion vector with respect to the main reference field of the present field *MV* and $MV_y^{main}$ indicates y coordinate of the motion vector with respect to the main reference field of the present field *MV*. In addition, $MV_x^{aux}$ ¦ indicates an x coordinate of the motion vector with respect to the subsidiary reference field of the present field *MV* and $MV_y^{aux}$ indicates a y coordinate of the motion vector with respect to the subsidiary reference field of the present field *MV*. Here, *dist* further indicates a distance in field units from the present field to the main reference field. Further, $\frac{1}{2} dist$ indicates an adjustment value for rounding off after a division operation and (*dist*-1) indicates a distance from the present field to the subsidiary reference field that is a bottom field. Since the main reference field and the subsidiary reference field belong to the same image, the (*dist* - 1) may be determined. Specifically, a cause of a difference between (*dist* + 1) of Equation 2 and (*dist* - 1) of Equation 6 is a distance difference between a distance from the present field to the main reference field and a distance from the present field to the subsidiary reference field. The term *offset* indicates an adjustment value to adjust a polarity difference. Specifically, *offset* in Equation 6 is to adjust the polarity difference between the main reference field and the subsidiary reference field. In addition, as described above, when a method for expressing a motion vector in half pixel units is used, for example, *offset* in Equation 6 may be 1.

FIG. 7 illustrates the example case that a polarity of a present field and main reference field are different from each other and the main reference field is a future field.

Referring to a top portion 710 of FIG. 7, when a field No. 6, which is a bottom field having a different polarity from the present field is selected, to be the main reference field, a motion estimator 101 may select a field No. 5, which is a top field of the same image where the main reference field belongs, to be the subsidiary reference field. In this instance, the motion estimator 101 may derive a motion vector with respect to the subsidiary reference field of the present field from a motion vector with respect to the main reference field of the present field that is currently encoded, using a linear transformation given in the below Equation 7, for example.

Equation 7:

$$MV_x^{aux} = \frac{MV_x^{main} \times (dist-1) + \frac{1}{2}dist}{dist}$$

$$MV_y^{aux} = \frac{(MV_y^{main} + offset) \times (dist-1) + \frac{1}{2}dist}{dist}$$

Here, $MV_x^{main}$ indicates an x coordinate of the motion vector with respect to the main reference field of the present field $MV$ and $MV_y^{main}$ indicates y coordinate of the motion vector with respect to the main reference field of the present field $MV$. In addition, $MV_x^{aux}$ indicates an x coordinate of the motion vector with respect to the subsidiary reference field of the present field $MV$ and $MV_y^{aux}$ indicates a y coordinate of the motion vector with respect to the subsidiary reference field of the present field $MV$. Here, $dist$ further indicates a distance in field units from the present field to the main reference field. Further, $\frac{1}{2}dist$ indicates an adjustment value for rounding off after a division operation and ($dist$-1) indicates a distance from the present field to the subsidiary reference field that is a bottom field. Since the main reference field and the subsidiary reference field belong to the same image, the ($dist$-1) may be determined. Specifically, a cause of a difference between ($dist$+1) of Equation 3 and ($dist$-1) of Equation 7 is a distance difference between a distance from the present field to the main reference field and a distance from the present field to the subsidiary reference field. The term $offset$ indicates an adjustment value to adjust a polarity difference. Specifically, $offset$ in Equation 7 is used before performing transformation to adjust the polarity difference between the main reference field and the present field, and the $offset$ may adjust the polarity difference of the present field before the transformation.

In addition, as described above, when a method for expressing a motion vector in half pixel units is used, for example, $offset$ in Equation 7 may be 1.

Referring to a bottom portion 720 of FIG. 7, when a field No. 4, which is a top field having a different polarity from the present field, is selected to be the main reference field, the motion estimator 101 may select a field No. 5, which is a bottom field of the same image where the main reference field belongs, to be the subsidiary reference field. In this instance, the motion estimator 101 may derive the motion vector with respect to the subsidiary reference field of the present field from the motion vector with respect to the main reference field of the present field that is currently encoded, using the linear transformation of the below Equation 8, for example.

Equation 8:

$$MV_x^{aux} = \frac{MV_x^{main} \times (dist+1) + \frac{1}{2}dist}{dist}$$

$$MV_y^{aux} = \frac{(MV_y^{main} + offset) \times (dist+1) + \frac{1}{2}dist}{dist}$$

Here, $MV_x^{main}$ indicates an x coordinate of the motion vector with respect to the main reference field of the present field *MV* and $MV_y^{main}$ indicates any coordinate of the motion vector with respect to the main reference field of the present field *MV*. In addition, $MV_x^{aux}$ indicates an x coordinate of the motion vector with respect to the subsidiary reference field of the present field *MV* and $MV_y^{aux}$ indicates a y coordinate of the motion vector with respect to the subsidiary reference field of the present field *MV*. Here, *dist* further indicates a distance in field units from the present field to the main reference field. Further, $\frac{1}{2}dist$ indicates an adjustment value for rounding off after a division operation and (*dist*+1) indicates a distance from the present field to the subsidiary reference field that is a bottom field. Since the main reference field and the subsidiary reference field belong to the same image, the (*dist*+1) may be determined. Specifically, a cause of a difference between (*dist* - 1) of Equation 4 and (*dist*+ 1) of Equation 8 is a distance difference between a distance from the present field to the main reference field and a distance from the present field to the subsidiary reference field. The term *offset* indicates an adjustment value to adjust a polarity difference. Specifically, *offset* in Equation 8 is used before performing transformation to adjust the polarity difference between the main reference field and the present field, and the *offset* may adjust a polarity difference of the present field before the transformation. In addition, as described above, when a method for expressing a motion vector in half pixel units is used is used, for example, *offset* in Equation 8 may be - 1.

In addition, the motion estimator 101 may compare a compression rate of the present field according to the motion vector of the main reference field with a compression rate of the present field according to the motion vector of the subsidiary reference field and select one of the motion vector of the main reference field and the motion vector of the subsidiary reference field according to a comparison result. That is, when the compression rate of the present field according to the motion vector of the main reference field is higher than the compression rate of the present field according to the motion vector of the subsidiary reference field, the motion estimator 101 selects the motion vector of the main reference field and when the compression rate of the present field according to the motion vector of the subsidiary reference field is higher than the compression rate of the present field according to the motion vector of the main reference field, the motion estimator 101 selects the motion vector of the subsidiary. Specifically, the motion estimator 101 may compare a difference between a block in the main reference field that is indicated by the motion vector of the main reference field and a block of the present field with a difference between a block in the subsidiary reference field that is indicated by the motion vector of the subsidiary reference field and a block of the present field, and may select a motion vector of one that has difference smaller than the other. Although the main reference field is generally best matched to the present field, since estimation of the motion vector of the present field is performed by a block unit, another reference field may be better matched than the main reference field with respect to some block among blocks making up the present field.

A motion compensator 102 may generate a prediction field of the present field from at least one reference field of reference fields stored in a buffer 111 using a motion vector that is selected by the motion estimator 101 from among the motion vector of the main reference field and that of the subsidiary reference field. In detail, the motion compensator 102 may determine values of blocks of the at least one reference field that is indicated by the motion vector that is selected by the motion estimator 101 from among the motion vector of the main reference field and that of the subsidiary reference field, thereby generating the prediction field of the present field.

An image compression/encoding method using the motion estimator 101 and motion compensator 102 is referred to as an inter-encoding method that compresses/encodes an image using temporal redundancy between a plurality of images or fields making up a single movie. In addition, an image compression/encoding method using spatial redundancy in a plurality of images or fields of a single movie is referred to as an intra-encoding method. For convenience of description, below the inter-encoding method will be applied to an embodiment. However, those skilled in the art would appreciate that the intra-encoding method may also be applied to an embodiment. Further, in an embodiment, the intra-encoding method may be applied to an image input to an interlace scanning image encoding apparatus 100 and a result transformed by a transforming unit 104.

A subtracter 103 may subtract the prediction field generated by the motion compensator 102 from the present field, and may thereby generate a residual field between the present field and the prediction field. The transforming unit 104 may transform the residual field generated by the subtracter 103 from a color space to a frequency space, and may thereby generate a frequency coefficient of the residual field. For example, the transforming unit 104 may transform the residual field generated by the substracter 103 from the color space to the frequency space using a Discrete Hadamard Transform (DHT), a Discrete Cosine Transform (DCT), and the like, only as an example.

A quantizing unit 105 may quantize the frequency coefficient generated by the transforming unit 104. Specifically, the quantizing unit 105 may divide the frequency coefficient generated by the transforming unit 104 into quantizing parameters and approximate a result to values of a positive number.

An entropy encoder 106 may entropy-encode positive number values corresponding to the result quantized by the quantizing unit 105 and encoding information of the present field, and may thereby generate a corresponding bit stream. For example, the entropy encoder 106 may entropy-encode the positive number values corresponding to the result quantized by the quantizing unit 105 using Context-Adaptive Variable-Length Coding (CAVLC), Context-Adaptive Binary Arithmetic Coding (CAVAC), and the like.

Here, the encoding information of the present field, which is information generated while the motion estimator 101 and the like perform encoding image, is desired when an image decoding apparatus restores the present field. Examples of the information may include an index of a reference field, motion vector of a reference field, and the like. Specifically, an interlace scanning image decoding apparatus corresponding to the interlace scanning image encoding apparatus 100 according to an example embodiment may only transmit the motion vector of the main reference field and, with respect to the motion vector of the subsidiary reference field, and derive from the motion vector of the main reference field. Accordingly, information used to derive the motion vector of the subsidiary reference field may be further desired in addition to the general information as described above.

The interlace scanning image encoding apparatus 100 may not transmit the information used to derive the motion vector of the subsidiary reference field to the interlace scanning decoding apparatus and may directly transmit an index of the subsidiary reference field and the motion vector of the subsidiary reference field like the main reference field. In this instance, the deriving of the motion vector of the subsidiary reference field performed by the image decoding apparatus may not be needed. In general, since an amount of data used to express the index of the subsidiary reference field and the motion vector of the subsidiary reference field is substantial, it is relatively efficient that the image encoding apparatus 100 transmits information used to derive the motion vector of the subsidiary reference field to the image decoding apparatus.

In addition, since the interlace scanning image encoding apparatus 100 may determine the main reference field and subsidiary reference field in the same image as described above, the apparatus may not transmit information related to the subsidiary reference field to the interlace scanning image decoding apparatus. That is, the interlace scanning decoding apparatus may derive the motion vector of the subsidiary reference field using the index of the main reference field and motion vector of the main reference field. According to an embodiment, the interlace scanning image encoding apparatus 100 may transmit, to the interlace scanning decoding image apparatus, information informing that the subsidiary reference field is included in the same image where the main reference field belongs.

In addition, the entropy encoder 106 may entropy-encode at least one of the motion vector of the main reference field having a predetermined syntax and subsidiary reference field information. However, when a relation of the main reference field and the subsidiary reference field between the interlace scanning image encoding apparatus 100 and are provided and stored or when any motion vector of a subsidiary reference field is not selected while the motion estimator 101 compares a compression rate, the entropy encoder 106 may entropy-encode the motion vector of the main reference field only.

A dequantizing unit 108 may dequantize positive number values corresponding the result quantized by the quantizing unit 105, and may thereby restore a frequency coefficient of residual field between the present field and a prediction field. In detail, the dequantizing unit 108 may multiply the positive number values approximated by the quantizing unit 105 by a quantizing parameter, and thereby can restore the frequency efficient of the residual field between the present field and prediction field.

An inverse transforming unit 109 may transform the frequency coefficients restored by the dequantizing unit 108 from a frequency space to a color space, and may thereby restore a residual field between the present field and prediction field. An adder 110 may add the residual field restored by the inverse transforming unit 109 to the prediction field generated by the motion compensator 102 to generate a restoration field of the present field and store the restoration field in the buffer 111. The restoration field currently stored in the buffer 11 may be used as a reference field of a future field following the present field or a past field existing prior to the present field.

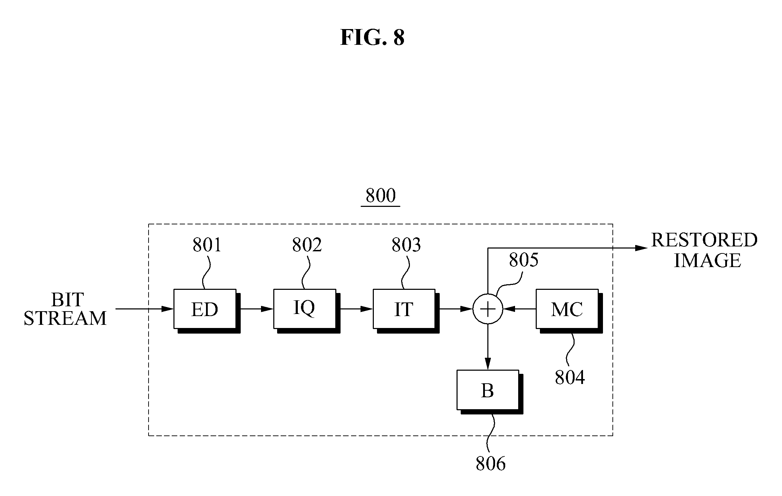

FIG. 8 illustrates an apparatus of decoding an interlace scanning image, according to one or more embodiments.

As illustrated in FIG. 8, the interlace scanning image apparatus 800 may include an entropy decoder 801, dequantizing unit 802, inverse transforming unit 803, motion compensator 804, adder 805, and buffer 806, for example. A process of restoring image of the interlace scanning image decoding apparatus 800 of FIG. 8 may be similar to a process of restoring image of the interlace scanning image encoding apparatus 100, for example. Therefore, in such an example, although further description may be omitted, description with respect to the image encoding apparatus 100 of FIG. 2 may applied to the image decoding apparatus 800.

Specifically, the example case that the interlace scanning image decoding apparatus 800 of FIG. 8 decodes an image according to the interlace scanning method will be described below.

The entropy decoder 801 may entropy-encode a bit stream transmitted from the interlace scanning image decoding apparatus 100 of FIG. 1 and restore positive values corresponding to a quantized result of a residual field between a present field and prediction field and encoding information of the present field. The dequantizing unit 802 may dequantize the positive number values restored by the entropy decoder 801, and thereby restore frequency coefficients of the residual field between the present field and prediction field. The inverse transforming unit 803 may restore the frequency coefficients restored by the dequantizing unit 802 from a frequency space to a color space, and thereby restoring the residual field between the present field and prediction field.

The motion compensator 804 may selectively perform a linear transformation of a motion vector of a main reference field included in information restored by the entropy decoder 801, based on a location of a subsidiary reference field included in the information, and thereby can derive a motion vector of the subsidiary reference field corresponding to the location. When any motion vector of a subsidiary reference field is not selected during a process of estimating motion in the image encoding apparatus 100, a location value of the subsidiary reference field does not exist in a syntax of the bit stream that the image decoding apparatus 100 receives from the image encoding apparatus 100, and in this instance, the motion compensator 804 may not derive the motion vector of the subsidiary. In addition, the motion compensator 804 may derive the motion vector of the subsidiary reference field existing in the same image where the main reference field belongs using an index or location of the main reference field.

In other words, in an embodiment, the motion compensator 804 may optionally perform a linear transformation of the motion vector of the main reference field using a time difference between the main reference field and present field and polarity difference between the main reference field and subsidiary reference field, and thereby can derive a motion vector of a subsidiary reference field corresponding to the location. A specific process of deriving a motion vector using the above example Equations 1 to 8 will be omitted, since it may be similar to the previous description.

In addition, the motion compensator 804 may generate the prediction field of the present field from at least one reference field of reference fields stored in a buffer 806 using the motion vector of the main reference field or subsidiary reference field. Specifically, the motion compensator 804 may determine values of blocks of the at least one reference field that is indicated by the motion vector of the main reference field included in the information restored by the entropy decoder 801 or the motion vector of the subsidiary reference field that is derived from the motion vector of the main reference field, and may thereby generate the prediction field of the present field. The adder 805 may add the prediction field generated by the motion compensator 804 to the residual field restored by the inverse transforming unit 804 to generate a restoration field of the present field and store the restoration field in the buffer 806.

In addition, according to an embodiment, the interlace scanning image encoding apparatus 100 or interlace scanning image decoding apparatus 800 may perform encoding or decoding field in an extended layer. In this instance, the encoding or decoding performed in the extended layer may have a difference in a field compared with the encoding or decoding performed in a basic layer as described in FIGS. 1 to 8.

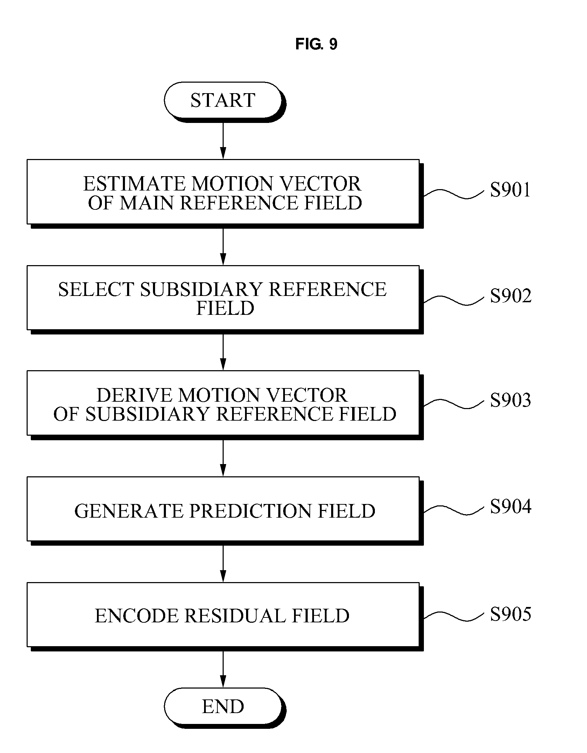

FIG. 9 illustrates a method of encoding an interlace scanning image, according to one or more embodiments.

As described in FIG. 9, the method of encoding the interlace scanning image may be performed through operations S901 to S905. Here, though the method may be implemented by the interlace scanning image encoding apparatus 100, for example, the method is not limited thereto.

In operation S901, motion of a present field corresponding to a portion, e.g., half, of a present image may be estimated based on a main reference field and a motion vector of the main reference field may be calculated.

In operation S902, a subsidiary reference field related to the main reference field may be selected.

In operation S903, a motion vector of the subsidiary reference field may be derived from the motion vector of the main reference field.

In operation S904, a predication field of the present field may be generated using the motion vector of the subsidiary reference field or the motion vector of the main reference field.

In operation S905, a residual field between the present field and the prediction field may be encoded.

Here, any descriptions with respect to the interlace scanning image encoding method that may not be fully described through FIG. 9 may be more fully understood from the descriptions of FIGS. 1 to 7, or may be easily analogized from the descriptions of FIGS. 1 to 7 by those skilled in the art.

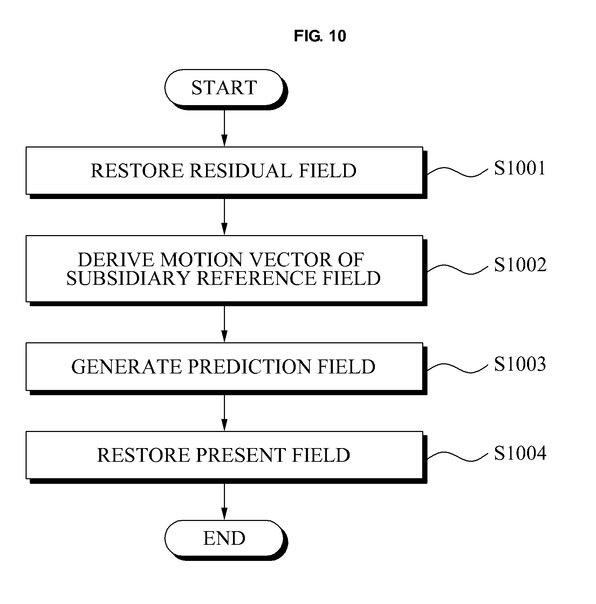

FIG. 10 illustrates a method of decoding an interlace scanning image, according to one or more embodiments.

As illustrated in FIG. 10, the method of decoding the interlace scanning image may be performed through operations S1001 to S1004. Here, though the method may be implemented by the interlace scanning image decoding apparatus 800 of FIG. 8, for example, the method is not limited thereto

In operation S1001, a residual field between a present field corresponding to a portion, e.g., half, of a present image and a prediction field may be restored from a bit stream.

In operation S1002, a motion vector of a subsidiary field may be derived from a motion vector of a main reference field among reference fields of the present field.

In operation S1003, the prediction field may be generated using the motion vector of the main reference field or the motion vector of the subsidiary reference field.

In operation S1004, the generated prediction field may be added to the restored residual field to restore the present field.

Here, any descriptions with respect to the interlace scanning image decoding method that may not be fully described through FIG. 10 may be more fully understood from the descriptions of FIGS. 1 to 7, or may be easily analogized from the descriptions of FIGS. 1 to 7 by those skilled in the art.

A method of encoding/decoding an interlace scanning image according to embodiments may include at least one processing device to implement the same and/or may be implemented by computer readable code recorded in computer-readable media, such as through program instructions to implement various operations embodied by a computer. The computer readable code may also include, alone or in combination with the program instructions, data files, data structures, and the like. Examples of computer-readable media include magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments.

Thus, although a few embodiments have been shown and described, it would be appreciated by those skilled in the art that changes may be made in these embodiments without departing from the principles and spirit of the invention, the scope of which is defined in the claims and their equivalents.

## Claims

1. An encoding method of encoding an interlace scanning image, the method comprising:

    estimating motion of a present field corresponding to a portion of a present image based on a main reference field for the present image and calculating a motion vector of the main reference field;
    selecting a subsidiary reference field related to the main reference field;
    deriving a motion vector of the subsidiary reference field from the motion vector of the main reference field;
    generating a prediction field of the present field from at least one of the motion vector of the main reference field and the motion vector of the subsidiary reference field; and
    encoding a residual field between the present field and the prediction field to generate the encoded interlace scanning image.

2. The method of claim 1, wherein the main reference field is a temporarily past field relative to the present field, and/or wherein the main reference field is a temporarily future field relative to the present field.

3. The method of claim 1, wherein the selecting of the subsidiary reference field selects a field with a polarity different from a polarity of the main reference field, as the subsidiary reference field, and/or wherein the selecting of the subsidiary reference field selects a field with a different polarity in a same image where the main reference field belongs, as the subsidiary reference field.

4. The method of claim 1, wherein the deriving of the motion vector includes performing a linear transformation based on the motion vector of the main reference field to derive the motion vector of the subsidiary reference field.

5. The method of claim 4, wherein the linear transformation is performed using a determined time difference between the main reference field and the present field.

6. The method of claim 1, further comprising:

    selecting one of the motion vector of the main reference field and the motion vector of the subsidiary reference field according to a comparison result between a compression rate of the present field according to the motion vector of the main reference field and a compression rate of the present field according to the motion vector of the subsidiary reference field.

7. The method of claim 1, further comprising:

    wherein the generating of the prediction field of the present field comprises generating the prediction field selectively based on one of the motion vector of the main reference field and the motion vector of the subsidiary reference field.

8. The method of claim 1, further comprising:

encoding the motion vector of the main reference field according to a predetermined syntax without encoding the motion vector of the subsidiary reference field to generate the encoded interlace scanning image.

9. The method of claim 1, wherein the present field, main reference field, and subsidiary reference field are respectively one of a top and bottom interlace fields.

10. A decoding method of decoding an interlace scanning image, the method comprising:

restoring, from a bit stream, a residual field between a present field, corresponding to a portion of a present image, and a prediction field for the present field;
deriving a motion vector of a subsidiary reference field from a motion vector of a main reference field among reference fields of the present field;
generating the prediction field from one of the motion vector of the main reference field and the motion vector of the subsidiary reference field; and
generating the decoded interlace scanning image by adding the restored residual field to the generated prediction field.

11. The method of claim 10, wherein the main reference field is a temporarily past field relative to the present field, and/or the main reference field is a temporarily future field relative to the present field.

12. The method of claim 10, wherein the subsidiary reference field is a polarity field different from a polarity of the main reference field, and/or wherein the subsidiary reference field is a field with a different polarity in a same image where the main reference field belongs.

13. The method of claim 10, wherein the deriving of the motion vector includes performing a linear transformation based on the motion vector of the main reference field, among the reference fields of the present field, and deriving the motion vector of the subsidiary reference field.

14. An encoding apparatus encoding an interlace scanning image, the apparatus comprising:

a motion estimator to estimate a motion of a present field corresponding to a portion of a present image based on a main reference field for the present image to calculate a motion vector of the main reference field, to select a subsidiary reference field related to the main reference field, and to derive a motion vector of the subsidiary reference field from the motion vector of the main reference field;
a motion compensator to generate a prediction field of the present field from one of the motion vector of the main reference field and the motion vector of the subsidiary reference field; and
an encoder to encode a residual field between the present field and the prediction field to generate the encoded interlace scanning image.

15. A decoding apparatus decoding an interlace scanning image, the apparatus comprising:

a decoder to restore, from a bit stream, a residual field between a prediction field for a present image and a present field corresponding to a portion of the present image;
a compensator to derive a motion vector of a subsidiary reference field from a motion vector of the main reference field among reference fields of the present field, and to generate the prediction field from one of the motion vector of the main reference field and motion vector of the subsidiary reference field; and
an adder to add the restored residual field to the generated prediction field to restore the present field to generate the encoded interlace scanning image.

**FIG. 1**

**FIG. 2**

SUBSIDIARY REFERENCE FIELD

MAIN REFERENCE FIELD

MAIN REFERENCE FIELD

SUBSIDIARY REFERENCE FIELD

SUBSIDIARY REFERENCE FIELD

MAIN REFERENCE FIELD

MAIN REFERENCE FIELD

SUBSIDIARY REFERENCE FIELD

☒ PRESENT FIELD

▨ MAIN REFERENCE FIELD

▨ SUBSIENCE REFERENCE FIELD

**FIG. 3**

PRESENT FIELD

MAIN REFERENCE FIELD

SUBSIENCE REFERENCE FIELD

## FIG. 4

**FIG. 5**

**FIG. 6**

**FIG. 7**

EP 2 117 234 A2

**FIG. 8**

**FIG. 9**

```
                    ┌─────────────┐
                    │    START    │
                    └─────────────┘
                           │
                           ▼
        ┌────────────────────────────────────┐
        │    ESTIMATE MOTION VECTOR          │ ╭── S901
        │   OF MAIN REFERENCE FIELD          │
        └────────────────────────────────────┘
                           │
                           ▼
        ┌────────────────────────────────────┐
        │   SELECT SUBSIDIARY REFERENCE      │ ╭── S902
        │             FIELD                  │
        └────────────────────────────────────┘
                           │
                           ▼
        ┌────────────────────────────────────┐
        │     DERIVE MOTION VECTOR           │ ╭── S903
        │  OF SUBSIDIARY REFERENCE FIELD     │
        └────────────────────────────────────┘
                           │
                           ▼
        ┌────────────────────────────────────┐
        │    GENERATE PREDICTION FIELD       │ ╭── S904
        └────────────────────────────────────┘
                           │
                           ▼
        ┌────────────────────────────────────┐
        │     ENCODE RESIDUAL FIELD          │ ╭── S905
        └────────────────────────────────────┘
                           │
                           ▼
                    ┌─────────────┐
                    │     END     │
                    └─────────────┘
```

**FIG. 10**

```
        ┌──────────────┐
        │    START     │
        └──────┬───────┘
               │
               ▼
   ┌──────────────────────────┐
   │  RESTORE RESIDUAL FIELD  │ ────── S1001
   └──────────┬───────────────┘
              │
              ▼
   ┌──────────────────────────┐
   │  DERIVE MOTION VECTOR OF │
   │ SUBSIDIARY REFERENCE FIELD│ ────── S1002
   └──────────┬───────────────┘
              │
              ▼
   ┌──────────────────────────┐
   │ GENERATE PREDICTION FIELD│ ────── S1003
   └──────────┬───────────────┘
              │
              ▼
   ┌──────────────────────────┐
   │  RESTORE PRESENT FIELD   │ ────── S1004
   └──────────┬───────────────┘
              │
              ▼
        ┌──────────────┐
        │     END      │
        └──────────────┘
```